# EUROPEAN PATENT APPLICATION

(11) **EP 2 665 150 A2**
(43) Date of publication of application: **20.11.2013**
(21) Application number: 13178704.6
(22) Date of filing: 30.07.2008
(51) Int. Cl.: H02J 3/00, H02J 7/34

(54) **A plant for low-power preferably single-phase electrical supply to buildings for residential and non-residential use**

(62) Divisional of application: 08808212.8
(71) Applicant: Delli Compagni, Emidio Emilio, 64100 Piano della Lenta (TE) (IT)
(72) Inventor: Delli Compagni, Emidio Emilio, 64100 Piano della Lenta (TE) (IT)
(74) Representative: Casadei, Giovanni

(57) **Abstract**

A plant for supplying electric power to a building, comprising: a source of electric power (2); a plurality of electrical connections (3), supplied by the source (2) via a supply circuit, designed to enable the connection to the source (2) and a supply of power to the electric appliances (3); a control device (5) designed to: constantly measure the total electric power drawn by the electric appliances; compare the total draw measured with a pre-established maximum value of available electric power; block or limit the delivery of electric power to certain electrical connections (3) if the total electric power draw measured exceeds the pre-established maximum value; said control device (5) operating via a first main operating algorithm which assigns the electrical connections (3) given importance indices that define an overall scale of importance of the electrical connections (3); block or limit the delivery of electric power to an electrical connection (3) based on its importance index.

## Description

### Technical field

The present invention relates to a plant for a low-power preferably single-phase electrical supply to buildings for residential and non-residential use. In other words the plant of the present invention makes it possible to supply all users exclusively with electricity, enabling other energy carriers to be eliminated.

### Background art.

In modern buildings intended for both residential and non-residential use, there are present a certain number of energy systems which enable an equal number of types of functions to be activated by the occupants of said buildings.

The functions normally present in such buildings include:
lighting;
production of domestic hot water;
heating;
operation of small/large electrical appliances and other users that work with electricity (electrical/electronic appliances);
cooking (cooking hob, oven, electric plates, etc.);
other different appliances that work with electricity.

Heating, the production of domestic hot water and cooking, which require powers of a certain level in order to satisfy user needs, are normally managed with devices such as boilers, ovens and stoves supplied with gaseous, liquid or solid fuels, typically natural gas, LPG cylinders, diesel, kerosene, coal or wood, substantially to limit the use of electric power. Fulfilling all the functions listed above with electricity alone requires the use of a fairly high electric power, which is normally not available in single-phase form from the power distribution grid. In any case, the required electric power is unlikely to be supplied even in three-phase form and this is all the more true for homes. For these reasons, a combination of electricity and other forms of energy has traditionally be used to supply buildings.

The relatively lower costs for the supply of gas, together with the possibility offered by gas boilers to have domestic hot water instantly, have moreover enabled the latter to gain popularity and be chosen as the main energy carrier at the expense of electric boilers for the production of domestic hot water.

As is well known, the use of fossil fuels causes considerable problems of an environmental character which, based on the most recent regulations for controlling pollution and combating climate change, are measured in terms of the amount of carbon dioxide and greenhouse gases emitted into the atmosphere. All modern environmental regulations provide for users to limit the emission of carbon dioxide (CO2 and greenhouse gases) in order to combat climate change.

The clear aim of modern environmental regulations is thus to encourage all civil, industrial and commercial users to prefer the consumption of electricity produced from renewable sources as opposed to the consumption of fossil fuel, in order to limit the production of carbon dioxide and greenhouse gases and the emission thereof into the atmosphere and thereby limit global warming.

The object of the present invention is to offer a plant for a low-power preferably single-phase electrical supply to buildings for residential and non-residential use which enables the consumption of fossil fuels to be considerably reduced.

A further object of the present invention is to offer a plant which enables a reduction in the consumption of electricity by all devices and appliances present inside residential and non-residential buildings, so that the demand for electricity can be met by using renewable energy sources, both self-produced and purchased.

### Description of the invention.

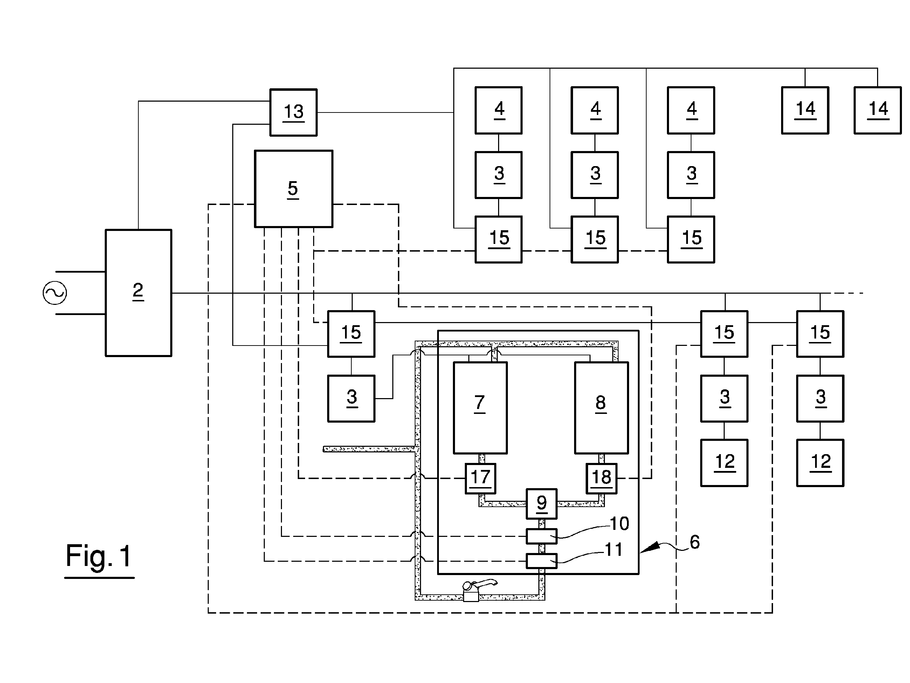

The features and advantages of the invention will be more apparent from the detailed description provided hereunder with reference to the appended figure, given by way of non-restrictive example, which illustrates a schematic representation of the plant according to the present invention. The plant according to the present invention comprises a source of electric power 2, preferably a source of single-phase or three-phase low power. The source of electric power 2 can consist for example: of the municipal power distribution grid; stand-alone plants for producing electricity from renewable sources; grid-connected plants for producing electricity from renewable sources; a combination of the solutions listed above.

In the preferred embodiment of the plant, there can be equally provided both a connection to the power distribution grid by means of a bi-directional meter of a known type, which enables electricity to be drawn and self-produced electricity to be fed back into the distribution grid, as is envisaged, for example, by Italian legislation with reference to the "on-site exchange", and electricity produced by stand-alone plants to be directly consumed before being fed back into the public grid.

The plant further comprises a plurality of electrical connections 3, which are supplied by the source 2 via a supply circuit and designed to enable a connection to the source 2 and a supply of power to electric appliances 4 of varying nature.

The plant comprises a control device 5, for example an electronic processor of a computerized type, which is designed to continuously measure the total electric power drawn by the electric appliances and compare the total draw measured with a pre-established maximum value of available electric power. As will be more clearly described below, the control device 5 is designed to automatically adopt several programmed control procedures.

The pre-established maximum value of power is dictated by the standard supply limits of the electric power distribution company. In Italy, for example, the maximum value of electric power available for a home is divided into classes of 3 kW, 4,5 kW and 6 kW and may be raised up to 10 kW of single-phase power with a supply voltage of 220 V. For higher powers, a three-phase 380 V supply is provided.

With the invention, though all the appliances are powered with electricity, the functionality of all can be assured, while reducing consumption, with a single-phase power supply of up to 10 kW for residential building units of a standard type (up to about 150 m²) or, for buildings with three-phase powers exceeding that value, with power supplies that are distinctly lower than what is normally necessary.

The control device 5 is moreover designed to block or limit the delivery of electric power to certain electrical connections 3 if the total electric power draw measured exceeds the pre-established maximum value. This function is performed by the control device 5 via a first main operating algorithm which: assigns the electrical connections 3 given importance indices that define an overall scale of importance of the electrical connections 3; if the total electric power draw exceeds the pre-established maximum value, the first operating algorithm will block or limit the delivery of electric power to an electrical connection 3 based on its importance index, i.e. it will block or limit the delivery of electric power starting from the least important electrical connections and proceeding to those of greater importance until the total power draw goes back below the pre-established maximum value.

In a preferred embodiment of the plant, the operating algorithm envisages at least three importance indices for the electrical connections. A first importance index corresponds to a constant, unconditional delivery of electric power. This first importance index can be assigned to connections intended to supply electric appliances which, if deprived of an electrical supply, will cause considerable problems, e.g. freezers, refrigerators, alarm or fire safety plants, indoor lighting or others.

A second importance index corresponds to a delivery of electric power subject to a comparison, to be made before the electric appliance is switched on, between the nominal power draw of the electric appliance and the remaining electric power available until the pre-established maximum value is reached. The electric power available until the pre-established maximum value is reached corresponds to difference between the maximum electric power available at the source of electric power and the total electric power that is already being drawn. If the remaining electric power available until the pre-established maximum value is reached is sufficient, the delivery of electric power to the connection will be allowed and, once started, cannot be subsequently blocked or limited. This second importance index can be assigned to the connections intended to supply electric appliances which, if they stop working once started, can cause inconvenience, as occurs, for example, in the case of ovens and cooking hobs. In fact, whereas the start of a cooking process can be deferred over time, stopping it usually causes an irreparable deterioration of the dishes and of the foods.

A third importance index corresponds to a continuously controlled delivery of electric power which can be limited or blocked if the total electric power draw exceeds the pre-established maximum value. The third importance index can be assigned to connections intended to supply electric appliances that can be started and stopped at any time without causing any particular problems, e.g. heating, domestic hot water, dishwashers and other electrical appliances.

The first operating algorithm can also envisage additional intermediate importance indices for electric appliances of a different type. Another possible control performed via the first operating algorithm can provide for the scale of importance indices to be integrated with a time scheme for controlling the delivery of electric power to some electrical connections. With the exception of the electrical connections 3 assigned the first importance index, in order to limit the total electric power draw it is possible to provide for electric power to be delivered to the electrical connections only in certain time slots, for example during the night, since the total electric power draw is in any case low. In this manner the peaks in the electric power draw can be reduced.

The manner in which the plant according to the present invention manages the delivery of electric power to the electrical connections serves to considerably limit the total electric power draw and consumption of electricity and to keep it below a pre-established value. As a result, the energy demands of a dwelling can be entirely met using renewable energy sources, for example by means of solar panels, wind generators or others. The electricity produced from the renewable sources can be fed into electric power grid by means of a bi-directional meter. The electricity necessary for the operation of the various electric appliances is drawn from the electric power grid itself through the same bi-directional meter. In this manner, any power peaks that are not covered by the electricity produced from renewable sources can be covered by the power grid, and in any case the overall balance between the energy produced from the renewable sources and the energy consumed through the plant according to the present invention is substantially neutral or characterized by a prevalence of energy produced from renewable sources relative to the energy consumed.

The plant according to the present invention comprises a heating device 6 designed to produce domestic hot water, comprising an instant electric heater 7, which is capable of raising the water temperature to a programmed temperature based on the available electric power, and functionally coupled to an electric boiler 8 of small dimensions capable of maintaining the water at a constant temperature equal to or greater than 65°. The heated water of the electric boiler 8 can be drawn in addition to the water from the instant heater 7 by means of a mixer 9, which is controlled in real time by the control device 5, connected to one of the electrical connections 3 and designed to mix the water to the desired temperature by combining the two solutions. The heating device 6 comprises an electric heater 7, of the instant type, which is connected to one of the electrical connections 3 and designed to heat a flow of water to a first temperature. The heating device 6 further comprises a boiler 8, which is equipped with a heater connected to another of the electrical connections 3 and designed to heat a given amount of water to a second temperature, equal to or greater than 65°, and greater than the first temperature. The electric heater 7 and boiler 8 are supplied by a single pipe connected to a general plumbing plant. A mixer 9 is designed to receive an incoming flow of water from the boiler and a flow of water from the electric heater and output a mixture between the two flows at a desired intermediate temperature between the first and second temperatures. This enables the layout of traditional plants to be superseded. The hot water pipes can in fact be eliminated since the heating device can be directly connected to the point of use.

In the preferred embodiment of the plant, the heating device 6 comprises at least a first thermometer 10, designed to measure the temperature of the water leaving the mixer 9, and a flow meter 11, designed to detect the presence of an outgoing flow of water from the mixer. The instant electric heater 7, the boiler heater 8, the mixer 9, the first thermometer 10 and the flow meter 11 are connected to the control device 5. In particular, the control device 5 switches on the electric heater 7 and boiler heater 8 and regulates the mixer in such a way as to vary the flow of water that is drawn from the boiler and mixed with the flow of water coming from the electric heater 7 based on the temperature measured by the first thermometer 10. For this purpose, the control device 5 operates via a second algorithm, based on which, in the presence of a flow of water detected by the flow meter 11, the electric heater 7 is switched on. The presence of a flow of water can be determined, for example, by a user opening a hot water tap. If the temperature measured by the first thermometer 10 is less than a required temperature value, which can be set, for example, by means of the control device 5, programmed accordingly, the mixer 9 will be regulated in such a way as to increase the flow of water drawn from the boiler 8, which, as described above, is at the second temperature; the latter substantially corresponds to the maximum temperature at which water can be delivered by the heating device 6. If the temperature measured by the first thermometer 10 is greater than or equal to the required temperature value, the mixer 9 will be regulated in such a way as to decrease or shut off the flow of water drawn from the boiler 8.

The operation of the heating device 6 is extremely efficient and rational. The functional integration between the electric heater 7 and boiler 8 makes it possible to reduce the electric power required by the heater 7, since the heater 7 can be sized in such a way as to produce a pre-established flow of water at a temperature that will vary according to the availability of electricity, with a maximum increase - relative to the value of the inlet water temperature, which normally varies between 10 °C and 15 °C - of about 25 °C, or in any case such as to enable a temperature of around 40 °C to be reached, at maximum power. Thisis sufficient to meet normal domestic needs in accordance with Italian legislation in this sector. If a higher water temperature is required, water drawn from the boiler 8, which is at a higher temperature than the water coming from the electric heater 7, will supplement the flow of water coming from the electric heater 7 and raise its temperature. In this manner, since the boiler 8 need not supply the entire flow of hot water, it can be sized, both in terms of capacity and power much more compactly than in the case of normal domestic installations, for example with a capacity of 60 I to 80 I and a power of 1.5 Kw, and thus with a low consumption of electricity. Furthermore, the boiler heater 8, duly insulated so as to limit heat loss, can be programmed via the control device 5 to switch on at times when the total electric power draw is lower, such as, for example, during the night. A second thermometer 18, connected to the control device 5, measures the temperature of the water contained in the boiler 8 so as to activate requests to the control device 5 to switch on the boiler heater. A third thermometer 17 can also be connected to the control device 5 to measure the outlet temperature of the water from the electric heater 7. The heating device 6 can also be conceived to operate autonomously as a replacement for common boilers fired by gas or another fuel. In this case, the control device 5 will be incorporated within the heating device 6 itself. The second algorithm executed by the control device is integrated into the first operating algorithm executed by the control device 5 by attributing the second importance index to the electric heater 7 and the third importance index to the boiler heater 8. The delivery of hot water from the instant electric heater 7, once started, is thus assured at a minimum temperature value. Increasing this temperature with water drawn from the boiler 8 is subject to the availability of electric power until the pre-established maximum value is reached. To this end, the electric heater 7 can be constructed in such a way as to enable the power draw to be adjusted between a minimum value and maximum value which correspond to a minimum and maximum temperature value at which the electric heater 7 can heat the water. If the maximum temperature reached is not sufficient to match the desired temperature level, hot water, always available, is drawn from the boiler 8. The adjustment of the power draw of the electric heater 7 can thus be tied not only to the required water temperature, but also the availability of electric power until the pre-established maximum value is reached: if the available electric power decreases or becomes zero, the control device 5 will decrease the delivery of electric power to the electric heater 7 to the minimum value.

The plant according to the present invention further comprises a plurality of electric heating elements 12, designed to be placed in different areas or rooms of the dwelling in which the plant is installed. The electric heating elements 12 are preferably radiant elements, which can be placed on the floor, on the ceiling or on a wall, and can heat the area or room they are placed in by irradiation. Each electric heating element 12 is connected to an electrical connection 3 and is controlled by the control device 5, via the first operating algorithm, by attributing the third importance index to the electric heating elements 12. The electric heating elements 12 together define the heating plant of the building unit. The overall operation of this heating plant can be controlled by the control device 5 based on normal control parameters of normal heating plants with gas or diesel boilers, that is, the time programming of the plant's operation and the temperature one wishes to heat the dwelling to.

The electric heating elements 12 are controlled via a third operating algorithm, integrated into the first operating algorithm, based on which, should the remaining electric power available until the pre-established maximum value is reached not be sufficient to supply all the electric heating elements simultaneously, the control device 5 will temporarily switch off at least one electric heating element 12 according to a predetermined time cycle so as to limit the total electric power draw of the electric heating elements to a value that is less than or equal to the power available at that moment before the pre-established maximum value is reached. In other words, heating the dwelling, or some rooms or areas thereof, to a given temperature entails switching on one or more electric heating elements 12 and thus delivering electric power to the electric heating elements. Should the remaining electric power available until the pre-established maximum value is reached not allow power to be delivered to all of the heating elements, one or more heating elements will be switched off at pre-established time intervals so as to decrease the total electric power draw. It is possible to include a scale of importance for the electric heating elements 12, based on which some elements 12 cannot be switched off (for example, the ones placed in bathrooms), others can be switched off unconditionally and yet others can be switched off at every control cycle of the control device, or every two control cycles, every three control cycles and so forth. The on/off cycles of the various heating elements 12 can thus be set, for example, according to the type of room and the presence of people inside the rooms, in order to limit the total instantaneous electric power drawn by all users and avoid exceeding the available power.

The plant according to the present invention can also be provided with cooling devices, which can be controlled by the third operating algorithm in a manner wholly similar to that of the heating elements. A particular cooling device that can be efficiently integrated into the plant according to the present invention is made up by geothermal heat pumps.

In order to limit the electric power draw of the cooling devices, the plant according to the present invention can be provided with means to control solar irradiation. The means to control solar irradiation comprise, for example, shades, blinds and/or roll-up shutters equipped with motors which actuate the opening and closing thereof and are controlled by the control device 5. The means for controlling solar irradiation can be managed by the control device 5 based on programmed times or using irradiation sensors positioned outside the dwelling.

Advantageously, the plant is provided with at least one rechargeable electric storage battery 13 capable of delivering a lower electric power than that delivered by the main source of electric power. Preferably, the battery has a supply voltage of 12 V DC. The battery 13 is connected to the main source of electric power and is constantly supplied by the latter. The battery 13 in turn supplies power to a plurality of low-power electric devices 14 by means of suitable cables and connections. The low-power electric devices 14 comprise, for example, light fixtures, the control device 5, home automation controllers 15, burglar alarm and fire safety plants and in general devices which must remain functional even in the event of a blackout, at least for a given period of time.

In order to limit the total electric power draw, the light fixtures consist of light sources with LED technology. An example of a light source that is particularly well suited to be integrated into the plant according to the present invention is a lamp that comprises a transparent or semitransparent cover enclosing a certain number of LEDs grouped into a bulb pack. The rechargeable battery 13 also powers a plurality of home automation controllers 15, each of which is interposed between at least an electrical connection 3 and the electrical source 2. The home automation controllers 15 are moreover connected to the control device 5, which, via the controllers, controls the delivery of electric power to the electrical connections 3.

A major advantage of the plant according to the present invention is that in the event of a blackout, the building equipped with the invention will continue to have overall lighting for a period of time of at least 12 hours thanks to the batteries, which are always kept charged and will continue to deliver electricity even when the primary source fails.

The control device 5 can be provided with a peripheral communication device, for example a keyboard or a touch screen monitor, to enable users to modify certain functional parameters of the operating algorithms. It is possible, for example, to change the importance indices attributed to the electrical connections 3, change the programmed times for the supply of electric power to the electrical connections 3, change the temperature at which they desire to maintain the individual rooms into which the building unit is divided and so forth.

The plant according to the present invention thus makes it possible to produce domestic hot water, use electricity for cooking and heat rooms using only electricity.

The instantaneous control and management of the total electric power drawn for the production of hot water and heating and other loads in fact makes it possible to limit the total electric power draw to a level below the electric powers normally available for dwellings. The instantaneous control and management of the total electric power draw thus enables all functions normally present in dwellings to be fulfilled by means of electric appliances, thereby completely eliminating the use of fossil fuels.

This control makes it possible to use electricity at the time it is needed and to constantly verify the levels of consumption in order to determine whether they correspond to the planned profile and levels of consumption that are lower than without the invention.

## Claims

1. A plant for supplying electric power to a building, comprising:
a source of electric power (2);
a plurality of electrical connections (3) supplied by the source (2) via a supply circuit and designed to enable the connection to the source (2) and
a supply of power to the electric appliances (3);
a control device (5) designed to: constantly measure the total electric power drawn by the electric appliances; compare the total draw measured with a pre-established maximum value of available electric power; block or
limit the delivery of electric power to certain electrical connections (3) if the total electric power draw measured exceeds the pre-established maximum value;
said control device (5) operating via a first main operating algorithm which assigns the electrical connections (3) given importance indices that define an overall scale of importance of the electrical connections (3); block or
limit the delivery of electric power to an electrical connection (3) based on its importance index;
wherein said operating algorithm envisages at least: a first importance index, which corresponds to a constant, unconditional delivery of electric power; a second importance index, which corresponds to a delivery of electric power subject to a comparison between the electric power drawn by the electric appliance when it is switched on and the remaining electric power available until the pre-established maximum value is reached, the delivery of electric power, if allowed, not being able to be subsequently blocked or limited; a third importance index, which corresponds to a continuously controlled delivery of electric power which can be limited or
blocked if the total electric power draw exceeds the pre-established maximum value;
**characterized in that** it comprises a plurality of electric heating elements (12) designed to be placed in different areas or rooms of a building unit, each of which elements is connected to an electrical connection (3) and is controlled by the control device (5) via the first operating algorithm,
wherein the third importance index is attributed to the electric heating elements (12).

2. The plant according to claim 1, wherein, should the remaining power available until the pre-established maximum value is reached not be sufficient to supply all the electric heating elements simultaneously, the control device (5) will temporarily switch off at least one electric heating element (12) according to a predetermined time cycle so as to limit the total electric power drawn by the electric heating elements to a value that is less than or equal to the remaining power available until the pre-established maximum value is reached.

3. The plant according to claim 1 or 2, comprising a water heating device (6) which comprises: an instant electric heater (7), connected to one of the electrical connections (3), which is designed to heat a flow of water passing through it to a first temperature; a boiler (8), equipped with a heater connected to another of the electrical connections (3), which is designed to heat a given amount of water to a second temperature that is higher than the first temperature; a mixer (9), designed to receive an incoming flow of water from the boiler and a flow of water from the electric heater 7 and to output a mixture between the due flows.

4. The plant according to claim 3, wherein said heating device (6) comprises: a first thermometer (10), designed to measure the temperature of the flow of water leaving the mixer (9); a flow meter (11), designed to detect the presence of an outgoing flow of water from the mixer.

5. The plant according to claim 4, wherein the electric heater (7), the boiler heater (8), the mixer (9), the first thermometer (10) and the flow meter (11) are controlled by the control device (5), which switches on the electric heater (7) and boiler heater (8) and regulates the mixer in such a way as to vary the flow of water that is drawn from the boiler (8) and mixed with the flow of water coming from the electric heater.

6. The plant according to claim 5, wherein the control device (5) controls the electric heater (7), the boiler heater (8) and the mixer (9) via a second algorithm, based on which, in the presence of a flow of water detected by the flow meter (11), the electric heater (7) is switched on:
if the temperature measured by the first thermometer (10) is less than a required temperature value, the mixer (9) will be regulated in such a way as to increase the flow of water drawn from the boiler;
If the temperature measured by the first thermometer (10) is greater than or equal to the required temperature value, the mixer (9) will be regulated in such a way as to decrease or shut off the flow of water drawn from the boiler.

7. The plant according to claim 6, wherein the second algorithm executed by the control device is integrated into the first main algorithm executed by the control device 5 by attributing the second importance index to the electric heater (7) and the third importance index to the boiler heater (8).

8. The plant according to one of the preceding claims, comprising at least one rechargeable electric storage battery (13), which is constantly supplied by the source of electric power (2) and in turn supplies power to a plurality of low-power electric devices (14), wherein said rechargeable battery is attributed the first importance index.

9. The plant according to claim 8, comprising a plurality of light sources (14) for complete lighting of the building, which are supplied with 12V or 24V direct current by said rechargeable battery (13).

10. The plant according to claim 9, wherein said light sources (14) are of the LED type.

11. The plant according to claim 10, wherein said rechargeable battery (13) is sized so as to assure a power supply to the light sources (14) for at least 12 hours in the case of a failure of the source of electric power (2).

12. The plant according to one of the preceding claims, comprising a plurality of home automation controllers (15), each of which is interposed between at least an electrical connection (3) and the source of electric power (2), said home automation controllers being controlled by the control device (5), which, via the controllers, controls the delivery of electric power to the electrical connections (3).

13. The plant according to claim 12, wherein the home automation controllers (15) are powered by the rechargeable battery (13).

14. The plant according to one of the preceding claims, wherein the source of electric power (2) comprises a device to produce electricity from renewable sources.

15. The plant according to one of the preceding claims, wherein the source of electric power (2) is designed to be supplied with a low power, preferably single-phase.

16. The plant according to one of the preceding claims, comprising a heat pump device for heating, cooling and/or the production of domestic hot water.
